# FASCICULE DE BREVET EUROPEEN

(11) **EP 4 015 367 B1**
(45) Date de publication et mention de la délivrance du brevet: **12.06.2024**
(21) Numéro de dépôt: 21214367.1
(22) Date de dépôt: 14.12.2021
(51) Int. Cl.: B64C 13/04, B64C 13/12, G05G 9/047, G05G 11/00

(54) **DISPOSITIF DE PILOTAGE D'UN AÉRONEF ET PROCÉDÉ ASSOCIÉ**
VORRICHTUNG ZUM STEUERN EINES LUFTFAHRZEUGS UND ENTSPRECHENDES VERFAHREN
DEVICE FOR PILOTING AN AIRCRAFT AND ASSOCIATED METHOD

(30) Priorité: 15.12.2020 FR 2013253
(43) Date de publication de la demande: 22.06.2022
(73) Titulaire: Dassault Aviation, 75008 Paris (FR)
(72) Inventeur: LE BORLOCH, Jérôme, 92214 Saint Cloud (FR)
(74) Mandataire: Lavoix

(56) Documents cités:
- EP-A1- 0 204 598
- FR-A1- 2 888 009
- FR-A1- 2 963 318

## Description

La présente invention concerne un dispositif de pilotage d'un aéronef, selon le préambule de la revendication 1.

Un tel dispositif de pilotage est destiné à faciliter le pilotage de l'aéronef en reproduisant la position du manche d'un pilote aux commandes de l'aéronef sur le manche du pilote qui n'est pas aux commandes de l'aéronef. Ainsi, le pilote qui n'est pas aux commandes peut ressentir à travers son manche, les commandes effectuées par le pilote aux commandes sur le manche pilote.

Le document FR 2 888 009 décrit un tel dispositif de pilotage.

Dans le dispositif de pilotage en question, lorsque le pilote aux commandes et le pilote qui n'est pas aux commandes appliquent sur leur manche respectif des commandes différentes, il est impossible de mettre en oeuvre une génération d'un effort représentatif de la différence de commande et d'appliquer cet effort sur les manches pour qu'il soit apprécié par les pilotes.

Un but de l'invention est de pallier cet inconvénient en proposant un dispositif de pilotage permettant une coopération plus précise entre le pilote aux commandes et le pilote qui n'est pas aux commandes.

A cet effet, l'invention a pour objet un dispositif de pilotage du type précité et selon la partie caractérisante de la revendication 1.

Le dispositif selon l'invention peut comprendre l'une ou plusieurs des caractéristiques des revendications 2 à 12, prise(s) isolément ou suivant toute combinaison techniquement envisageable.

L'invention a également pour objet un procédé de pilotage d'un aéronef selon la revendication 13.
Optionnellement, le procédé est selon la revendication 14.

L'invention sera mieux comprise à la lecture de la description qui va suivre donnée uniquement à titre d'exemple, et faite en se référant aux dessins annexés, sur lesquels :
- la figure 1 est une vue schématique de dessus d'un cockpit d'un aéronef dans lequel est implémenté un dispositif de pilotage selon l'invention ;
- la figure 2 est une vue en perspective de trois-quarts face d'une partie du dispositif de pilotage selon l'invention, incluant un manche et un support sur lequel est monté le manche ;
- la figure 3 est une représentation schématique du dispositif de pilotage selon l'invention ;
- la figure 4 est un exemple de profil de force appliquée par un mécanisme élastique sur chaque manche en fonction de la position dudit manche par rapport au neutre pour le contrôle de la profondeur ;
- la figure 5 est un exemple de profil de force appliquée par un mécanisme élastique sur le premier manche en fonction de la position dudit premier manche par rapport au neutre pour le contrôle du gauchissement ;
- la figure 6 est un exemple de profil de force appliquée par un mécanisme élastique sur le deuxième manche en fonction de la position dudit deuxième manche par rapport au neutre pour le contrôle du gauchissement ;
- la figure 7 est une représentation schématique simplifiée du dispositif de pilotage selon l'invention, un premier manche subissant une force appliqué par un premier membre d'équipage, un deuxième manche subissant une force d'ajustement, de sorte que les positions de chacun des manches par rapport à leur neutre soient identiques ; et
- la figure 8 est une représentation schématique similaire à celle de la figure 7, le deuxième manche subissant une force appliqué par un deuxième membre d'équipage, le premier manche subissant une force d'ajustement en fonction de la force appliquée par le deuxième membre d'équipage.

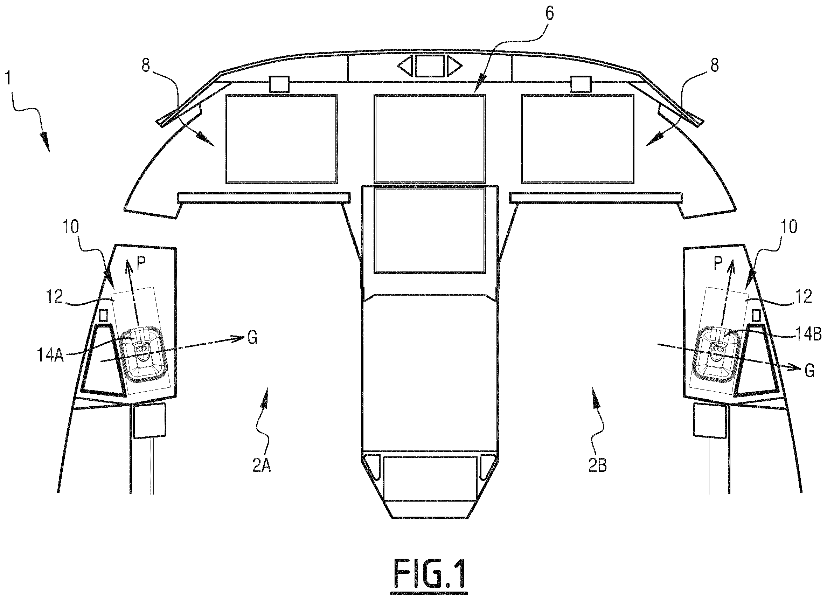

En référence à la figure 1, on décrit un cockpit 1 d'un aéronef. Le cockpit 1 comprend un premier poste de pilotage 2A et un deuxième poste de pilotage 2B.

Le premier poste de pilotage 2A est destiné à accueillir un premier membre d'équipage, par exemple, un pilote de l'aéronef. Le deuxième poste de pilotage 2B est destiné à accueillir un deuxième membre d'équipage, par exemple, un copilote de l'aéronef.

Le cockpit 1 comprend, par exemple, un panneau de contrôle 6. Le panneau de contrôle 6 comprend des éléments accessibles et actionnables par les membres d'équipage pour piloter l'aéronef. Ces éléments sont classiques et ne seront pas décrits en détail ici.

Dans la suite, en référence aux figures 1 à 8, on décrit un dispositif de pilotage 10 d'un aéronef. Un tel dispositif de pilotage 10 est installé dans le cockpit 1 de l'aéronef, qui comprend de manière connue au moins un afficheur 8 destiné à afficher des informations de pilotage à l'attention de l'équipage.

Le dispositif de pilotage 10 est destiné à permettre, par exemple, au pilote et/ou au copilote de piloter l'aéronef en actionnant des surfaces mobiles de l'aéronef pour engendrer une commande en roulis et en tangage.

Le dispositif de pilotage 10 comprend un premier support 12 situé dans le premier poste de pilotage 2A, un deuxième support 12 situé dans le deuxième poste de pilotage 2B, un premier manche 14A monté sur le premier support 12 et un deuxième manche 14B monté sur le deuxième support 12. Chaque manche 14A, 14B est monté mobile sur le support 12 correspondant entre une pluralité de positions autour d'une position neutre p_{N} selon au moins un degré de liberté.

Dans ce qui suit, on décrit une application du dispositif de pilotage 10 pour la commande d'organes commandés de l'aéronef. Les organes commandés sont, par exemple, des gouvernes de gauchissement et de profondeur de l'aéronef. Les gouvernes de gauchissement sont, par exemple des ailerons de l'aéronef pour la commande en roulis de l'aéronef et les gouvernes de profondeur sont par exemple, le gouvernail de profondeur de l'aéronef pour la commande en tangage de l'aéronef. Les gouvernes forment des surfaces mobiles de l'aéronef.

Le nombre de degrés de liberté est par exemple de deux. Chaque degré de liberté présente une position de neutre p_{N}. Le premier degré de liberté est par exemple défini selon une direction longitudinale P correspondant à la profondeur. Le deuxième degré de liberté est, par exemple, défini selon une direction transversale G perpendiculaire à la direction longitudinale, correspondant au gauchissement.

Le premier degré de liberté correspond, par exemple, à une commande sur un axe de profondeur de l'aéronef. Un déplacement du manche 14A, 14B vers l'avant de l'aéronef correspond par exemple à une commande de plongée du nez de l'aéronef. Un déplacement du manche 14A, 14B vers l'arrière correspond, par exemple à une commande de redressement du nez de l'aéronef.

Le deuxième degré de liberté correspond, par exemple, à une commande sur un axe de gauchissement de l'aéronef. Un déplacement du manche 14A, 14B vers la droite de l'aéronef correspond par exemple à une commande d'inclinaison vers la droite de l'aéronef. Un déplacement du manche 14A, 14B vers la gauche correspond, par exemple à une commande d'inclinaison vers la gauche de l'aéronef.

La commande de l'aéronef est donc réalisée par déplacement du manche 14A, 14B selon au moins un degré de liberté par un membre d'équipage. Le déplacement du manche 14A, 14B est effectué par application d'une force de commande sur ledit manche 14A, 14B par un membre d'équipage. Dans la suite une force de commande appliquée par le pilote est appelée force de commande pilote Fₚₚ et une force de commande appliquée par le copilote est appelée force de commande copilote F_{pc}.

Selon l'exemple décrit, en référence à la figure 1, le premier manche 14A est situé sur un côté gauche du premier poste de pilotage 2A et le deuxième manche 14B est situé sur un côté droit du deuxième poste de pilotage 2B.

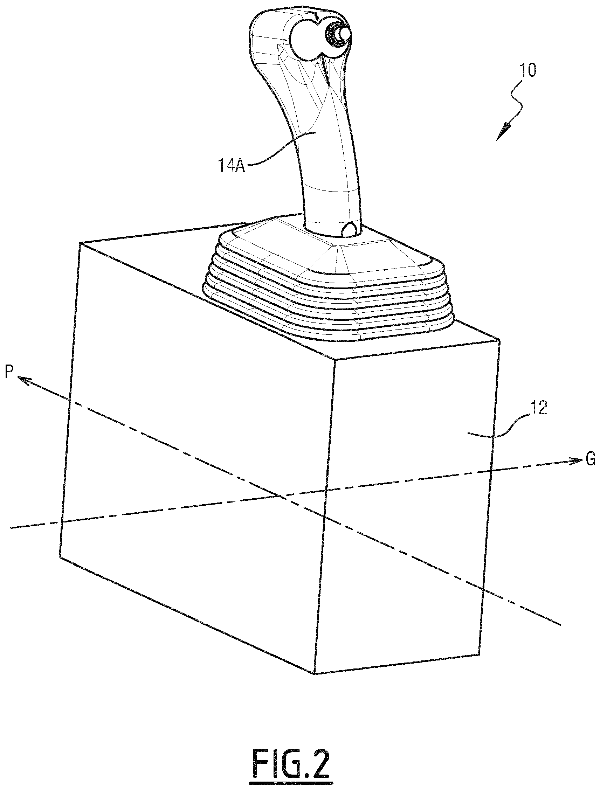

La figure 2 illustre un exemple de manche 14A, 14B monté sur un support 12. En particulier, la figure 2 illustre le manche 14A situé dans le premier poste de pilotage 2A.

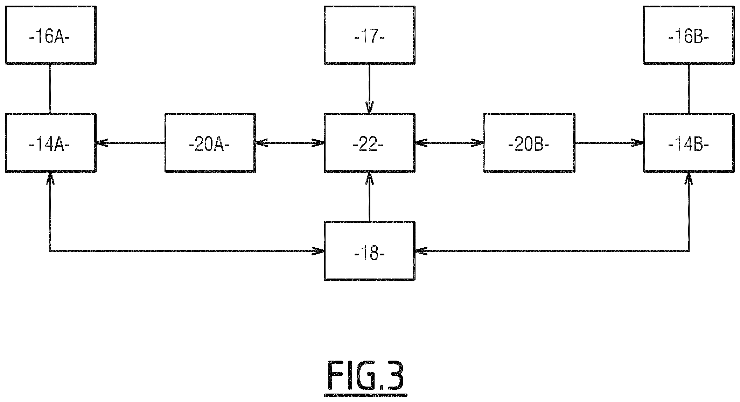

En référence à la figure 3, le dispositif de pilotage 10 comprend, en outre, un premier mécanisme élastique 16A configuré pour appliquer au premier manche 14A une première force de rappel F_{RA} vers sa position de neutre p_{N}, un deuxième mécanisme élastique 16B configuré pour appliquer au deuxième manche 14B une deuxième force de rappel F_{RB} vers sa position neutre p_{N} et une mémoire 17 contenant des données de force de rappel représentative des première et deuxième forces de rappel F_{RA}, F_{RB}.

Le dispositif de pilotage 10 comprend, en outre, un système 18 de détection de la position du premier manche 14A et du deuxième manche 14B, un premier système d'actionnement 20A configuré pour appliquer au premier manche 14A une première force d'ajustement de position F_{AA} selon le degré de liberté et un deuxième système d'actionnement 20B configuré pour appliquer au deuxième manche 14B une deuxième force d'ajustement de position F_{AB} selon le degré de liberté,

Le dispositif de pilotage 10 comprend, en outre, un module de commande 22 configuré pour commander la première force d'ajustement de position F_{AA} et la deuxième force d'ajustement de position F_{AB}.

Le module de commande 22 est par exemple formé par un module logiciel au sein d'au moins un calculateur comportant une mémoire propre à recevoir le module et un processeur propre à exécuter le module logiciel stocké dans ladite mémoire.

Le dispositif de pilotage 10 est dépourvu de système de mesure de la force de commande appliquée sur le premier ou le deuxième manches 14A, 14B par un membre d'équipage.

La première force de rappel F_{RA} appliquée par le premier mécanisme élastique 16A se décompose en une composante selon l'axe de profondeur F_{RAp} et une composante selon l'axe de gauchissement F_{RAg}.

La deuxième force de rappel F_{RB} appliquée par le deuxième mécanisme élastique 16B se décompose en une composante selon l'axe de profondeur F_{RBP} et une composante selon l'axe de gauchissement F_{RBg}.

Chaque mécanisme élastique 16A, 16B comprend au moins un système de ressorts. Chaque mécanisme élastique 16A, 16B comprend, par exemple, un système de ressorts pour la profondeur et un système de ressorts pour le gauchissement. La composante selon l'axe de profondeur F_{RAP}, F_{RBP} de la force de rappel F_{RA}, F_{RB} est appliquée par le système de ressort pour la profondeur correspondant. La composante selon l'axe de gauchissement F_{RAg}, F_{RBg} de la force de rappel F_{RA}, F_{RB} est appliquée par le système de ressort pour le gauchissement correspondant.

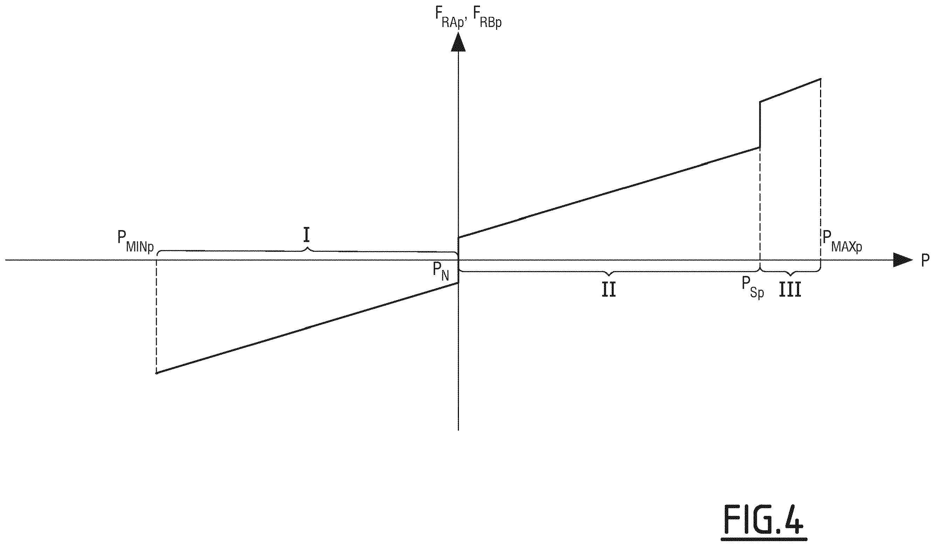

Les composantes selon l'axe de profondeur F_{RAP}, F_{RBP} suivent un profil de force de rappel de profondeur. Le profil de force de rappel de profondeur associe une valeur de composante selon l'axe de profondeur F_{RAP}, F_{RBp} de force de rappel F_{RA}, F_{RB} à chaque position du manche 14A, 14B associé selon l'axe de profondeur. Un exemple d'un tel profil de force de rappel de profondeur est illustré sur la figure 4.

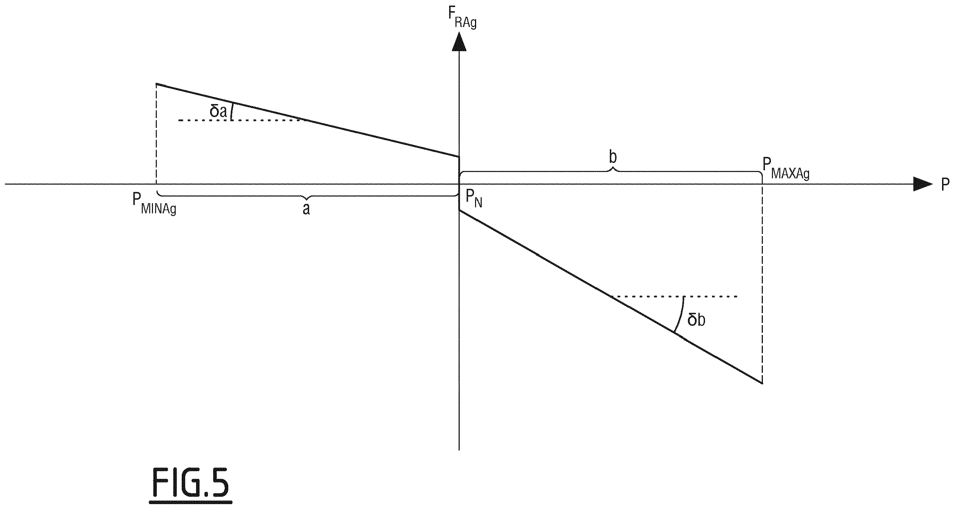

La composante selon l'axe de gauchissement F_{RAg} de la première force de rappel F_{RA} suit un premier profil de force de rappel de gauchissement. Le premier profil de force de rappel de gauchissement associe une valeur de composante selon l'axe de gauchissement F_{RAg} de la première force de rappel F_{RA} à chaque position du premier manche 14A selon l'axe de gauchissement. Un exemple d'un tel premier profil de force de rappel de gauchissement est illustré sur la figure 5.

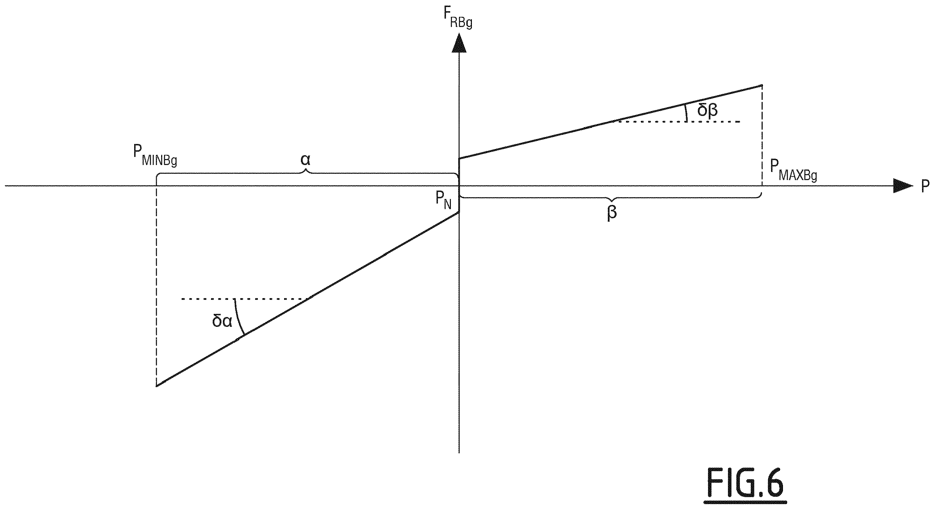

La composante selon l'axe de gauchissement F_{RBg} de la deuxième force de rappel F_{RB} suit un deuxième profil de force de rappel de gauchissement. Le deuxième profil de force de rappel de gauchissement associe une valeur de composante selon l'axe de gauchissement F_{RBg} de la deuxième force de rappel F_{RB} à chaque position du deuxième manche 14B selon l'axe de gauchissement. Un exemple d'un tel deuxième profil de force de rappel de gauchissement est illustré sur la figure 6.

Ainsi, chaque profil de force de rappel associe une valeur de force de rappel appliquée par le système de ressorts correspondant en fonction de la position du manche 14A, 14B correspondant selon le degré de liberté correspondant.

Sur les figures 4, 5 et 6, chaque profil de force de rappel est tracé en fonction de la position p du manche 14A, 14B correspondant selon le degré de liberté correspondant. La position nulle représente la position neutre p_{N} du manche 14A, 14B selon le degré de liberté correspondant.

Sur la figure 4, les positions positives représentent des positions dans lesquelles le manche 14A, 14B est déplacé vers l'avant de l'aéronef par rapport à la position neutre p_{N} et les positions négatives représentent des positions dans lesquelles le manche 14A, 14B est déplacé vers l'arrière de l'aéronef par rapport à la position neutre p_{N}.

Sur les figures 5 et 6, les positions positives représentent des positions dans lesquelles le manche 14A, 14B est déplacé vers la droite de l'aéronef par rapport à la position neutre p_{N} et les positions négatives représentent des positions dans lesquelles le manche 14A, 14B est déplacé vers la gauche de l'aéronef par rapport à la position neutre p_{N}.

En référence à la figure 4, le profil de force de rappel de profondeur présente trois portions distinctives I, Il et III. La première portion I s'étend entre une position minimale de profondeur p_{MINp}, correspondant à une position extrême du manche 14A, 14B vers l'arrière, et la position neutre p_{N}. La deuxième portion II s'étend entre la position neutre p_{N} et une position intermédiaire p_{Sp} correspondant à un saut de force de rappel. La troisième portion III s'étend ente la position intermédiaire p_{Sp} et une position maximale de profondeur p_{MAXp} correspondant à une position extrême du manche 14A, 14B vers l'avant. Au point neutre p_{N}, le profil de force de rappel de profondeur présente un saut de force de rappel correspondant à un seuil de force de rappel de profondeur. Comme illustré sur la figure 4, la portion II est, par exemple, symétrique à la portion I par rapport au point neutre p_{N} sur l'intervalle de positions [P_{N}; P_{Sp}].

En référence à la figure 5, le premier profil de force de rappel de gauchissement présente deux portions distinctives a et b. La première portion a s'étend entre une première position minimale de gauchissement p_{MINAg} correspondant à une position extrême du premier manche 14A vers la gauche et la position neutre p_{N}. La deuxième portion b s'étend entre la position neutre p_{N} et une première position maximale de gauchissement p_{MAXAg} correspondant à une position extrême du premier manche 14A vers la droite. Au point neutre p_{N}, le premier profil de force de rappel de gauchissement présente un saut de force de rappel correspondant à un seuil de force de rappel de gauchissement. La première portion a présente une première pente δₐ et la deuxième portion b présente une deuxième pente δ_{b}. En valeur absolue, la première pente δₐ est inférieure à la deuxième pente δ_{b}. Cette différence entre les pentes δₐ et δ_{b} compense la différence d'effort nécessaire pour déplacer le premier manche 14A vers la gauche (vers l'extérieur, ce qui demande plus d'effort avec la main gauche) que vers la droite (vers l'intérieur, ce qui demande moins d'effort avec la main gauche).

En référence à la figure 6, le deuxième profil de force de rappel de gauchissement présente deux portions distinctives α et β. La première portion α s'étend entre une deuxième position minimale de gauchissement p_{MINBg} correspondant à une position extrême du deuxième manche 14B vers la gauche et la position neutre p_{N}. La deuxième portion β s'étend entre la position neutre p_{N} et une deuxième position maximale de gauchissement p_{MAXBg} correspondant à une position extrême du deuxième manche 14B vers la droite. Au point neutre p_{N}, le premier profil de force de rappel de gauchissement présente un saut de force de rappel correspondant à un seuil de force de rappel de gauchissement. La première portion α présente une première pente δ_{α} et la deuxième portion β présente une deuxième pente δ_{β}. En valeur absolue, la première pente δ_{α} est supérieure à la deuxième pente δ_{β}. Cette différence entre les pentes δ_{α} et δ_{β} compense la différence d'effort nécessaire pour déplacer le deuxième manche 14B vers la gauche (vers l'intérieur, ce qui demande moins d'effort avec la main droite) que vers la droite (vers l'extérieur, ce qui demande plus d'effort avec la main droite).

En référence à la figure 5, le système de ressorts de gauchissement du premier mécanisme élastique 16A présente une première constante de raideur de gauchissement sur l'intervalle de position [P_{MINAg} ; P_{N}]. La première constante de raideur de gauchissement du système de ressorts de gauchissement du premier mécanisme élastique 16A correspond à la valeur absolue de la première pente δₐ du premier profil de rappel de gauchissement. Le système de ressorts de gauchissement du premier mécanisme élastique 16A présente une deuxième constante de raideur de gauchissement sur l'intervalle de position [P_{N}; P_{MAXAg}]. La deuxième constante de raideur de gauchissement du système de ressorts de gauchissement du premier mécanisme élastique 16A correspond à la valeur absolue de la deuxième pente δ_{b} du premier profil de rappel de gauchissement.

En référence à la figure 6, le système de ressorts de gauchissement du deuxième mécanisme élastique 16B présente une première constante de raideur de gauchissement sur l'intervalle de position [P_{MINBg} ; P_{N}]. La première constante de raideur de gauchissement du système de ressorts de gauchissement du deuxième mécanisme élastique 16B correspond à la valeur absolue de la première pente δₐ du deuxième profil de rappel de gauchissement. Le système de ressorts de gauchissement du deuxième mécanisme élastique 16B présente une deuxième constante de raideur de gauchissement sur l'intervalle de position [P_{N;} P_{MAXBg}]. La deuxième constante de raideur de gauchissement du système de ressorts de gauchissement du deuxième mécanisme élastique 16B correspond à la valeur absolue de la deuxième pente δ_{β} du deuxième profil de rappel de gauchissement.

La première pente δₐ du premier profil de rappel de gauchissement est égale à la première pente δ_{α} du deuxième profil de rappel de gauchissement multipliée par un coefficient de dissymétrie. La deuxième pente δ_{b} du premier profil de rappel de gauchissement est égale à la deuxième pente δ_{β} du deuxième profil de rappel de gauchissement multipliée par le coefficient de dissymétrie. Le coefficient de dissymétrie est, en particulier, négatif.

La première constante de raideur de gauchissement du système de ressorts de gauchissement du premier mécanisme élastique 16A est égale à la première constante de raideur de gauchissement du système de ressorts du deuxième mécanisme élastique 16B multipliée par la valeur absolue du coefficient de dissymétrie.

La deuxième constante de raideur de gauchissement du système de ressorts de gauchissement du premier mécanisme élastique 16A est égale à la deuxième constante de raideur de gauchissement du système de ressorts du deuxième mécanisme élastique 16B multiplié par la valeur absolue du coefficient de dissymétrie.

Le système de ressorts pour la profondeur de chaque mécanisme élastique 16A, 16B comprend un groupe de ressorts principal et un groupe de ressorts auxiliaire.

Le système de ressorts de profondeur de chaque mécanisme élastique 16A, 16B est configuré de sorte que la force de rappel F_{RA}, F_{RB} soit appliquée par le groupe de ressorts principal lorsque le manche associé est déplacé entre une première position et une deuxième position. En particulier, la composante selon l'axe de profondeur F_{RAp}, F_{RBP} de la force de rappel F_{RA}, F_{RB} est appliquée par le groupe de ressorts principal lorsque le manche 14A, 14B associé est déplacé entre la première position et la deuxième position.

Le système de ressorts de profondeur de chaque mécanisme élastique 16A, 16B est configuré de sorte que la force de rappel F_{RA}, F_{RB} soit appliquée par le groupe de ressorts principal et le groupe de ressorts auxiliaire lorsque le manche associé est déplacé entre la deuxième position et une troisième position. En particulier, la composante selon l'axe de profondeur F_{RAP}, F_{RBp} de la force de rappel F_{RA}, F_{RB} est appliquée par le groupe de ressorts principal et le groupe de ressorts auxiliaire lorsque le manche 14A, 14B associé est déplacé entre la deuxième position et la troisième position.

En référence à la figure 4, la première position est la position neutre p_{N}. La deuxième position est la position intermédiaire p_{Sp}. La troisième position est la position maximale de profondeur P_{MAXp}.

De la sorte, comme illustré sur la figure 4, le système de ressorts de profondeur de chaque mécanisme élastique 16A, 16B présente une première constante de raideur sur la portion Il et une deuxième constante de raideur sur la portion III. La deuxième constante de raideur du système de ressorts de profondeur de chaque mécanisme élastique 16A, 16B est supérieur à la première constante de raideur du système de ressorts de profondeur de chaque mécanisme élastique 16A, 16B.

La mémoire 17 comprend au moins un premier ensemble de données de force de rappel représentative de la première force de rappel F_{RA} selon chaque degré de liberté et au moins un deuxième ensemble de données de force de rappel représentative de la deuxième force de rappel F_{RB} selon chaque degré de liberté.

Le premier ensemble de données de force de rappel comprend un premier sous-ensemble de données de force de rappel de profondeur représentatif de la composante selon l'axe de profondeur F_{RAp} de la première force de rappel F_{RA} et un premier sous-ensemble de données de force de rappel de gauchissement représentatif de la composante selon l'axe de gauchissement F_{RAg} de la première force de rappel F_{RA}.

Le premier sous-ensemble de données de force de rappel de profondeur associe pour chaque position du premier manche 14A selon l'axe de profondeur, la composante selon l'axe de profondeur F_{RAp} de la première force de rappel F_{RA} correspondante appliquée par le premier mécanisme élastique 16A. Le premier sous-ensemble de données de force de rappel de gauchissement associe pour chaque position du premier manche 14A selon l'axe de gauchissement, la composante selon l'axe de gauchissement F_{RAg} de la première force de rappel F_{RA} correspondante appliquée par le premier mécanisme élastique 16A.

Le deuxième ensemble de données de force de rappel comprend un deuxième sous-ensemble de données de force de rappel de profondeur représentatif de la composante selon l'axe de profondeur F_{RBp} de la deuxième force de rappel F_{RB} et un deuxième sous-ensemble de données de force de rappel de gauchissement représentatif de la composante selon l'axe de gauchissement F_{RBg} de la deuxième force de rappel F_{RB}.

Le deuxième sous-ensemble de données de force de rappel de profondeur associe pour chaque position du deuxième manche 14B selon l'axe de profondeur, la composante selon l'axe de profondeur F_{RBp} de la deuxième force de rappel F_{RB} correspondante appliquée par le deuxième mécanisme élastique 16B. Le deuxième sous-ensemble de données de force de rappel de gauchissement associe pour chaque position du deuxième manche 14B selon l'axe de gauchissement, la composante selon l'axe de gauchissement F_{RBg} de la deuxième force de rappel F_{RB} correspondante appliquée par le deuxième mécanisme élastique 16B.

Comme illustré sur la figure 3, le système 18 de détection de la position du premier manche 14A et du deuxième manche 14B est raccordé à chaque manche 14A, 14B. Il est configuré pour générer une première donnée de position représentative de la position du premier manche 14A et une deuxième donnée de position représentative de la position du deuxième manche 14B.

La première donnée de position est représentative de la position du premier manche 14A selon chaque degré de liberté. La deuxième donnée de position est représentative de la position du deuxième manche 14B selon chaque degré de liberté.

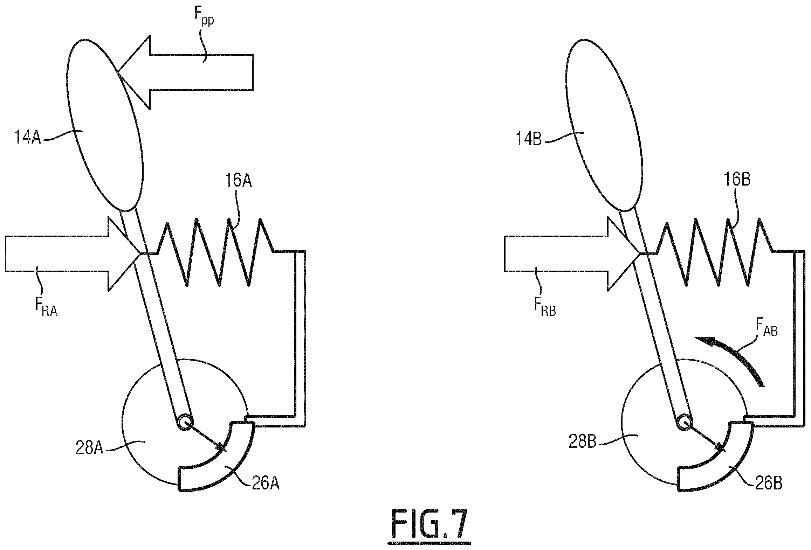

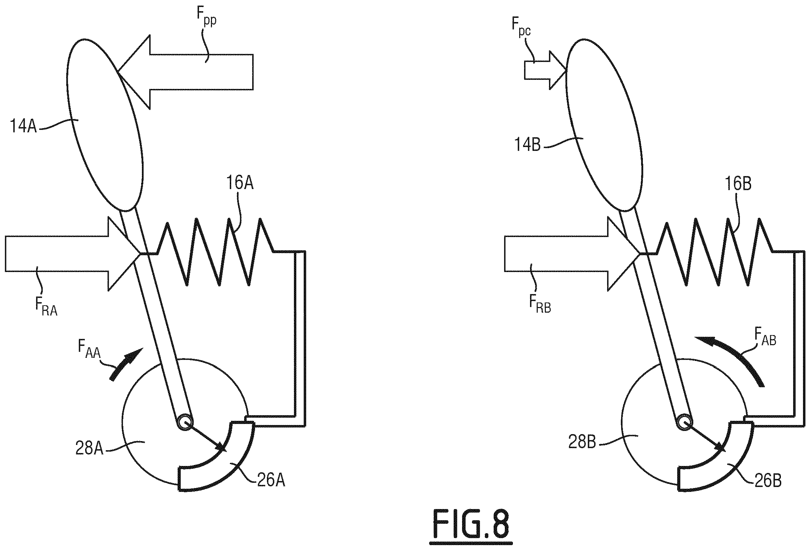

Comme illustré sur les figures 7 et 8, le système de détection 18 comprend, pour chaque degré de liberté, un premier capteur de position 26A, les premiers capteurs de position 26A étant configurés pour générer la première donnée de position et, pour chaque degré de liberté, un deuxième capteur de position 26B, les deuxièmes capteurs de position 26B étant configurés pour générer la deuxième donnée de position.

Les première et deuxième données de positions sont, par exemple, envoyées à une centrale de pilotage de l'aéronef. Les surfaces mobiles de l'aéronef sont commandées en fonction de ces données de positions.

Le premier système d'actionnement 20A est configuré pour déplacer le premier manche 14A selon chaque degré de liberté lorsque le deuxième manche 14B est déplacé, afin d'égaliser la position du premier manche et du deuxième manche par rapport à la position neutre p_{N}. Le premier système d'actionnement 20A comprend un actionneur 28A pour chaque degré de liberté. Chaque actionneur 28A du premier système d'actionnement 20A est configuré pour déplacer le premier manche 14A selon le degré de liberté associé.

Pour déplacer le premier manche 14A, le premier système d'actionnement 20A est configuré pour appliquer la première force d'ajustement de position F_{AA} sur le premier manche 14A. La première force d'ajustement de position F_{AA} se décompose en une composante selon l'axe de profondeur F_{AAp} et une composante selon l'axe de gauchissement F_{AAg}.

Un actionneur 28A du premier système d'actionnement 20A est configuré pour appliquer la composante selon l'axe de profondeur F_{AAp} de la première force d'ajustement de position F_{AA} selon l'axe de profondeur. Un autre actionneur 28A du premier système d'actionnement 20A est configuré pour appliquer la composante selon l'axe de gauchissement F_{AAg} de la première force d'ajustement de position F_{AA} selon l'axe de gauchissement.

Le premier système d'actionnement 20A est, en outre, configuré pour générer une première donnée de force d'ajustement représentative de la première force d'ajustement de position F_{AA} appliquée par les actionneurs du premier système d'actionnement 20A selon chaque degré de liberté. En particulier, la première donnée de force d'ajustement est représentative de chaque composante F_{AAb}, F_{AAg} de la première force d'ajustement de position F_{AA}.

Le deuxième système d'actionnement 20B est configuré pour déplacer le deuxième manche 14B selon chaque degré de liberté lorsque le premier manche 14A est déplacé. Le deuxième système d'actionnement 20B comprend un actionneur 28B pour chaque degré de liberté. Chaque actionneur 28B du deuxième système d'actionnement 20B est configuré pour déplacer le deuxième manche 14B selon le degré de liberté associé.

Pour déplacer le deuxième manche 14B, le deuxième système d'actionnement 20B est configuré pour appliquer la deuxième force d'ajustement F_{AB} sur le deuxième manche 14B. La deuxième force d'ajustement de position F_{AB} se décompose en une composante selon l'axe de profondeur F_{ABp} et une composante selon l'axe de gauchissement F_{ABg}.

Un actionneur 28B du deuxième système d'actionnement 20B est configuré pour appliquer la composante selon l'axe de profondeur F_{ABg} de la deuxième force d'ajustement de position F_{AB} selon l'axe de profondeur. Un autre actionneur 28B du deuxième système d'actionnement 20B est configuré pour appliquer la composante selon l'axe de gauchissement F_{ABg} de la deuxième force d'ajustement de position F_{AB} selon l'axe de gauchissement.

Le deuxième système d'actionnement 20B est, en outre, configuré pour générer une deuxième donnée de force d'ajustement représentative de la deuxième force d'ajustement de position F_{AB} appliquée par les actionneurs du deuxième système d'actionnement 20B selon chaque degré de liberté. En particulier, la deuxième donnée de force d'ajustement est représentative de chaque composante F_{ABp}, F_{ABg} de la deuxième force d'ajustement de position F_{AB}.

Le module de commande 22 est connecté à la mémoire 17, au système de détection 18 et aux systèmes d'actionnement 20A, 20B.

Le module de commande 22 est configuré pour recevoir depuis la mémoire 17 les premiers sous-ensembles de données de force de rappel de profondeur et de gauchissement et les deuxièmes sous-ensembles de données de force de rappel de profondeur et de gauchissement.

Le module de commande 22 est configuré pour recevoir depuis le système de détection 18, la première donnée de position et la deuxième donnée de position. Il est, en outre, configuré pour en déduire la position du premier manche 14A et la position du deuxième manche 14B selon chaque degré de liberté.

Le module de commande 22 est, en outre, configuré pour recevoir la première donnée de force depuis le premier système d'actionnement 20A et la deuxième donnée de force depuis le deuxième système d'actionnement 20B. Il est, en outre, configuré pour calculer la première force d'ajustement de position F_{AA} selon chaque degré de liberté à partir de la première donnée de force et la deuxième force d'ajustement de position F_{AB} selon chaque degré de liberté à partir de la deuxième donnée de force.

Comme illustré sur la figure 7, le module de commande 22 est, en outre, configuré pour contrôler le deuxième système d'actionnement 20B pour commander la deuxième force d'ajustement de position F_{AB} en fonction de la donnée de position du premier manche 14A de sorte que la position du premier manche 14A par rapport à sa position de neutre p_{N} et la position du deuxième manche 14B par rapport à sa position de neutre p_{N} soient identiques, selon chaque degré de liberté.

Comme illustré sur la figure 8, le module de commande 22 est, en outre, configuré pour contrôler le premier système d'actionnement 20A pour commander la première force d'ajustement de position F_{AA} en fonction de la deuxième force d'ajustement de position F_{AB} et de la deuxième force de rappel F_{RB} selon chaque degré de liberté.

La deuxième force d'ajustement de position F_{AB} dépend de la force de commande copilote F_{pc} appliquée sur le deuxième manche 14B par le copilote dans le cas où le copilote applique une force de commande. Comme illustré sur la figure 8, la force de commande F_{pc} appliqué par le copilote tend par exemple à éloigner le deuxième manche 14B d'une position qui est identique à celle du premier manche 14A. La deuxième force d'ajustement de position F_{AB} doit donc contrer cette force de commande copilote F_{pc} appliquée par le copilote pour maintenir la position du deuxième manche 14B identique à celle du premier manche 14A.

Le module de commande 22 est configuré pour calculer la force de commande copilote F_{pc}. A partir de la deuxième donnée de position et des deuxièmes sous-ensembles de données de force de rappel de profondeur et de gauchissement, le module de commande 22 déduit la deuxième force de rappel F_{RB} subite par le deuxième manche 14B. La force de commande copilote F_{pc} est égale à la deuxième force d'ajustement de position F_{AB} moins la deuxième force de rappel F_{RB} selon le degré de liberté associé.

Le module de commande 22 est, en outre, configuré pour contrôler la première force d'ajustement de position F_{AA} de sorte que la première force d'ajustement de position F_{AA} dépend de la force de commande copilote F_{pc}.

Dans le cas de l'axe de profondeur, le module de commande 22 est configuré pour contrôler la première force d'ajustement de position F_{AA} de sorte qu'elle soit égale à la force de commande copilote F_{pc}. Le pilote ressent via son manche 14A l'effort appliqué par copilote sur son manche 14B.

Dans le cas de l'axe de gauchissement, le module de commande 22 est configuré pour contrôler la première force d'ajustement de position F_{AA} de sorte qu'elle soit égale à la force de commande copilote F_{pc} multipliée par un coefficient de correction. Le coefficient de correction compense la dissymétrie entre les profils de force de rappel de gauchissement des premier et deuxième mécanismes élastiques 16A, 16B. Le coefficient de correction est, par exemple, égale à la valeur absolue du coefficient de dissymétrie

De manière symétrique, lorsque le copilote applique une force de commande, le module de commande 22 est configuré pour commander la première force d'ajustement de position F_{AA} en fonction de la donnée de position du deuxième manche 14B de sorte que la position du deuxième manche 14B par rapport à sa position de neutre et la position du premier manche 14A par rapport à sa position de neutre soient identiques.

De manière symétrique, le module de commande 22 est, en outre, configuré pour commander la deuxième force d'ajustement de position F_{AB} en fonction de la première force d'ajustement de position F_{AA} et de la première force de rappel F_{RA} lorsque le pilote applique une force de commande.

Dans ce qui suit, on décrit un procédé de pilotage d'un aéronef par un dispositif de pilotage 10 tel que décrit précédemment.

Dans un état initial, les premier et deuxième manches 14A, 14B sont, par exemple, dans leur position neutre p_{N}. Le pilote est le pilote aux commandes.

Le pilote déplace, par exemple, le premier manche 14A selon au moins un degré de liberté. Pour ce faire, le pilote applique une force de commande pilote Fₚₚ sur le premier manche 14A.

Le système de détection 18 détecte la position du premier manche 14A.

Le système de détection 18 génère au moins une donnée de position représentative de la position du premier manche 14A.

Le module de commande 22 commande la deuxième force d'ajustement de position F_{AB} en fonction de la donnée de position du premier manche 14A de sorte que la position du premier manche 14A par rapport à sa position neutre p_{N} et la position du deuxième manche 14B par rapport à sa position neutre p_{N} soient identiques.

Lorsque le copilote n'applique aucune force sur son manche 14B, les manches 14A et 14B sont donc assujettis à la même position par rapport à la position neutre p_{N}.

Le module de commande 22 commande, en outre, la première force d'ajustement de position F_{AA} en fonction de la deuxième force d'ajustement de position F_{AB} et de la deuxième force de rappel F_{RB}. Lorsque le copilote n'applique aucune force sur son manche 14B, la première force d'ajustement de position F_{AA} est nulle.

Dans certains cas, le copilote applique une force de commande copilote F_{pc} sur le deuxième manche 14B.

Le module de commande 22 modifie alors la deuxième force d'ajustement de position F_{AB} en fonction de la force de commande copilote F_{pc} appliquée sur le deuxième manche 14B par le copilote, pour contrer la force appliquée par le copilote.

Le module de commande 22 modifie, en outre, la première force d'ajustement de position F_{AA} en fonction de la deuxième force d'ajustement de position F_{AB} et de la deuxième force de rappel F_{RB}. Selon l'axe de profondeur, le module de commande 22 commande la première force d'ajustement de position F_{AA} de sorte qu'elle soit égale à la force de commande copilote F_{pc}. Selon l'axe de gauchissement, le module de commande 22 commande la première force d'ajustement de position F_{AA} de sorte qu'elle soit égale à la force de commande copilote F_{pc} multipliée par le coefficient de correction.

Grâce au dispositif de pilotage selon l'invention, le copilote a, par l'intermédiaire de son manche copilote, une conscience améliorée des commandes effectuées par le pilote. Le pilote a, également par l'intermédiaire de son manche pilote, une conscience améliorée d'une force appliquée par le copilote sur son manche pilote.

Ainsi, chaque membre d'équipage a une conscience quasi instantanée de toutes les forces qui sont appliquées sur les manches du dispositif.

En outre, en dépit du couplage entre les premier et deuxième manches, le dispositif de pilotage permet à chaque membre d'équipage de ressentir à travers son manche le profil de force de rappel associé audit manche sans ressentir le profil de force de rappel associé à l'autre manche. Ainsi, que le couplage entre les premier et deuxième manches soit en panne ou non, en terme de force de rappel appliquée sur le manche, chaque membre d'équipage ne ressent à travers son manche que le profil de force de rappel associé audit manche.

## Revendications

1. Dispositif de pilotage (10) d'un aéronef comprenant un premier manche (14A) et un deuxième manche (14B) chacun monté mobile sur un support (12) entre une pluralité de positions autour d'une position neutre (p_{N}) selon au moins un degré de liberté, le dispositif de pilotage (10) comprenant, en outre :
- un système de détection (18) de la position du premier manche (14A) et du deuxième manche (14B) configuré pour générer une première donnée de position représentative de la position du premier manche (14A) et une deuxième donnée de position représentative de la position du deuxième manche (14B),
- un premier mécanisme élastique (16A) configuré pour appliquer au premier manche (14A) une première force de rappel (F_{RA}) vers sa position neutre (p_{N}),
- un deuxième mécanisme élastique (16A) configuré pour appliquer au deuxième manche (14B) une deuxième force de rappel (F_{RB}) vers sa position neutre (p_{N}),
- un premier système d'actionnement (20A) configuré pour appliquer au premier manche (14A) une première force d'ajustement de position (F_{AA}) selon chaque degré de liberté,
- un deuxième système d'actionnement (20B) configuré pour appliquer au deuxième manche (14B) une deuxième force d'ajustement de position (F_{AB}) selon chaque degré de liberté,
- un module de commande (22) configuré pour commander la deuxième force d'ajustement de position (F_{AB}) en fonction de la donnée de position du premier manche (14A) de sorte que la position du premier manche (14A) par rapport à sa position de neutre (p_{N}) et la position du deuxième manche (14B) par rapport à sa position de neutre (p_{N}) soient identiques,
le dispositif de pilotage (10) étant **caractérisé en ce que** le module de commande (22) est, en outre, configuré pour commander la première force d'ajustement de position (F_{AA}) en fonction de la deuxième force d'ajustement de position (F_{AB}) et de la deuxième force de rappel (F_{RB}).

2. Dispositif de pilotage (10) selon la revendication 1, étant dépourvu de système de mesure d'une force de commande appliquée sur le premier ou le deuxième manches (14A, 14B) par un membre d'équipage.

3. Dispositif de pilotage (10) selon la revendication 1 ou 2, dans lequel la deuxième force d'ajustement de position (F_{AB}) dépend d'une force de commande appliquée sur le deuxième manche (14B) par un membre d'équipage de l'aéronef.

4. Dispositif de pilotage (10) selon la revendication 3, dans lequel le module de commande (22) est configuré pour calculer la force de commande, la force de commande étant égale à la deuxième force d'ajustement de position (F_{AB}) moins la deuxième force de rappel (F_{RB}).

5. Dispositif de pilotage (10) selon la revendication 3 ou 4, dans lequel la première force d'ajustement de position (F_{AA}) dépend de la force de commande.

6. Dispositif de pilotage (10) selon la revendication 5, dans lequel la première force d'ajustement de position (F_{AA}) est égale à la force de commande.

7. Dispositif de pilotage (10) selon la revendication 5, dans lequel la première force d'ajustement de position (F_{AA}) est égale à la force de commande multipliée par un coefficient de correction.

8. Dispositif de pilotage (10) selon l'une quelconque des revendications précédentes, dans lequel chaque mécanisme élastique (16A ; 16B) comprend un système de ressorts par degré de liberté.

9. Dispositif de pilotage (10) selon la revendication 8, dans lequel pour au moins un degré de liberté, le système de ressort associé du premier mécanisme élastique (16A) présente une constante de raideur selon ledit degré de liberté, le système de ressort associé du deuxième mécanisme élastique (16B) présente une constante de raideur selon ledit degré de liberté, la constante de raideur du système de ressort du premier mécanisme élastique (16A) étant égale à la constante de raideur du système de ressort du deuxième mécanisme élastique (16B) multipliée par la valeur absolue d'un coefficient de dissymétrie.

10. Dispositif de pilotage (10) selon la revendication 8 ou 9, dans lequel le système de ressort du mécanisme élastique (16A ; 16B) comprend un groupe de ressorts principal et un groupe de ressorts auxiliaire, le système de ressort du mécanisme élastique (16A ; 16B) étant configuré de sorte que :
- la force de rappel (F_{RA}, F_{RB}) soit appliquée par le groupe de ressorts principal lorsque le manche associé est déplacé entre une première position et une deuxième position, et
- la force de rappel (F_{RA}, F_{RB}) soit appliquée par le groupe de ressorts principal et le groupe de ressorts auxiliaire lorsque le manche associé est déplacé entre la deuxième position et une troisième position.

11. Dispositif de pilotage (10) selon l'une quelconque des revendications précédentes, dans lequel chaque manche (14A, 14B) est déplaçable selon au moins deux degrés de liberté, un premier degré de liberté étant défini selon une direction longitudinale (P) et un deuxième degré de liberté étant défini selon une direction transversale (G), la direction transversale (G) étant sensiblement perpendiculaire à la direction longitudinale (P).

12. Dispositif de pilotage (10) selon l'une quelconque des revendications précédentes, dans lequel le module de commande (22) est configuré pour commander la première force d'ajustement de position (F_{AA}) en fonction de la donnée de position du deuxième manche (14B) de sorte que la position du deuxième manche (14B) par rapport à sa position de neutre (p_{N}) et la position du premier manche (14A) par rapport à sa position de neutre (p_{N}) soient identiques,
le module de commande (22) étant, en outre, configuré pour commander la deuxième force d'ajustement de position (F_{AB}) en fonction de la première force d'ajustement de position (F_{AA}) et de la première force de rappel (F_{RA}).

13. Procédé de pilotage d'un aéronef par un dispositif de pilotage (10) selon l'une quelconque des revendications 1 à 12, le procédé comprenant les étapes de :
- déplacement du premier manche (14A) selon au moins un degré de liberté,
- détection par le système de détection (18) de la position du premier manche (14A),
- génération par le système de détection (18) d'une donnée de position représentative de la position du premier manche (14A),
- commande par le module de commande (22) de la deuxième force d'ajustement de position (F_{AB}) en fonction de la donnée de position du premier manche (14A) de sorte que la position du premier manche (14A) par rapport à sa position neutre (p_{N}) et la position du deuxième manche (14B) par rapport à sa position neutre (p_{N}) soient identiques,
- commande par le module de commande (22) de la première force d'ajustement de position (F_{AA}) en fonction de la deuxième force d'ajustement de position (F_{AB}) et de la deuxième force de rappel (F_{RB}).

14. Procédé de pilotage selon la revendication 13, comprenant en outre les étapes suivantes :
- application d'une force de commande sur le deuxième manche (14B) par un membre d'équipage,
- modification par le module de commande (22) de la deuxième force d'ajustement de position (F_{AB}) en fonction de la force de commande appliquée sur le deuxième manche (14B) par le membre d'équipage,
- modification par le module de commande (22) de la première force d'ajustement de position (F_{AA}) en fonction de la deuxième force d'ajustement de position (F_{AB}) et de la deuxième force de rappel (F_{RB}).

## Patentansprüche

1. Steuervorrichtung (10) eines Luftfahrzeugs mit einem ersten Steuerknüppel (14A) und einem zweiten Steuerknüppel (14B), die jeweils an einem Träger (12) zwischen mehreren Positionen um eine neutrale Position (p_{N}) herum gemäß mindestens einem Freiheitsgrad beweglich angebracht sind, wobei die Steuervorrichtung (10) außerdem Folgendes umfasst:
- ein System (18) zum Erfassen der Position des ersten Steuerknüppels (14A) und des zweiten Steuerknüppels (14B), das so konfiguriert ist, um erste Positionsdaten, die für die Position des ersten Steuerknüppels (14A) repräsentativ sind, und zweite Positionsdaten, die für die Position des zweiten Steuerknüppels (14B) repräsentativ sind, zu erzeugen,
- einen ersten elastischen Mechanismus (16A), der so konfiguriert ist, dass er auf den ersten Steuerknüppel (14A) eine erste Rückstellkraft (F_{RA}) in Richtung seiner neutralen Position (p_{N}) ausübt,
- einen zweiten elastischen Mechanismus (16A), der so konfiguriert ist, dass er auf den zweiten Steuerknüppel (14B) eine zweite Rückstellkraft (F_{RB}) in Richtung seiner neutralen Position (p_{N}) ausübt,
- ein erstes Betätigungssystem (20A), das so konfiguriert ist, dass es auf den ersten Steuerknüppel (14A) eine erste Positionsanpassungskraft (F_{AA}) gemäß jedem Freiheitsgrad ausübt,
- ein zweites Betätigungssystem (20B), das so konfiguriert ist, dass es auf den zweiten Steuerknüppel (14B) eine zweite Positionsanpassungskraft (F_{AB}) gemäß jedem Freiheitsgrad ausübt,
- ein Steuermodul (22), das so konfiguriert ist, dass es die zweite Positionsanpassungskraft (F_{AB}) in Abhängigkeit von den Positionsdaten des ersten Steuerknüppels (14A) so steuert, dass die Position des ersten Steuerknüppels (14A) in Bezug auf seine Neutralstellung (p_{N}) und die Position des zweiten Steuerknüppels (14B) in Bezug auf seine Neutralstellung (p_{N}) identisch sind,
wobei die Steuervorrichtung (10) **dadurch gekennzeichnet ist, dass** das Steuermodul (22) ferner so konfiguriert ist, dass es die erste Positionsanpassungskraft (F_{AA}) in Abhängigkeit von der zweiten Positionsanpassungskraft (F_{AB}) und der zweiten Rückstellkraft (F_{RB}) steuert.

2. Steuervorrichtung (10) nach Anspruch 1, die kein System zur Messung einer Steuerkraft besitzt, die von einem Besatzungsmitglied auf den ersten oder zweiten Steuerknüppel (14A, 14B) ausgeübt wird.

3. Steuervorrichtung (10) nach Anspruch 1 oder 2, wobei die zweite Positionsanpassungskraft (F_{AB}) von einer Steuerkraft abhängt, die von einem Besatzungsmitglied des Luftfahrzeugs auf den zweiten Steuerknüppel (14B) ausgeübt wird.

4. Steuervorrichtung (10) nach Anspruch 3, wobei das Steuermodul (22) so konfiguriert ist, dass es die Steuerkraft berechnet, wobei die Steuerkraft gleich der zweiten Positionsanpassungskraft (F_{AB}) minus der zweiten Rückstellkraft (F_{RB}) ist.

5. Steuervorrichtung (10) nach Anspruch 3 oder 4, wobei die erste Positionsanpassungskraft (F_{AA}) von der Steuerkraft abhängt.

6. Steuervorrichtung (10) nach Anspruch 5, wobei die erste Positionsanpassungskraft (F_{AA}) gleich der Steuerkraft ist.

7. Steuervorrichtung (10) nach Anspruch 5, wobei die erste Positionsanpassungskraft (F_{AA}) gleich der Steuerkraft multipliziert mit einem Korrekturkoeffizienten ist.

8. Steuervorrichtung (10) nach einem der vorhergehenden Ansprüche, wobei jeder elastische Mechanismus (16A; 16B) ein Federsystem pro Freiheitsgrad umfasst.

9. Steuervorrichtung (10) nach Anspruch 8, wobei für mindestens einen Freiheitsgrad das zugeordnete Federsystem des ersten elastischen Mechanismus (16A) eine Steifigkeitskonstante gemäß dem Freiheitsgrad aufweist, das zugehörige Federsystem des zweiten elastischen Mechanismus (16B) eine Steifigkeitskonstante gemäß dem Freiheitsgrad aufweist, wobei die Steifigkeitskonstante des Federsystems des ersten elastischen Mechanismus (16A) gleich der Steifigkeitskonstante des Federsystems des zweiten elastischen Mechanismus (16B) multipliziert mit dem Absolutwert eines Asymmetriekoeffizienten ist.

10. Steuervorrichtung (10) nach Anspruch 8 oder 9, wobei das Federsystem des elastischen Mechanismus (16A; 16B) eine Hauptfedergruppe und eine Hilfsfedergruppe umfasst, wobei das Federsystem des elastischen Mechanismus (16A; 16B) so konfiguriert ist, dass:
- die Rückstellkraft (F_{RA}, F_{RB}) von der Hauptfedergruppe aufgebracht wird, wenn der zugehörige Steuerknüppel zwischen einer ersten Position und einer zweiten Position bewegt wird, und
- die Rückstellkraft (F_{RA}, F_{RB}) von der Hauptfedergruppe und der Hilfsfedergruppe aufgebracht wird, wenn der zugehörige Steuerknüppel zwischen der zweiten Position und einer dritten Position bewegt wird.

11. Steuervorrichtung (10) nach einem der vorhergehenden Ansprüche, wobei jeder Steuerknüppel (14A, 14B) in mindestens zwei Freiheitsgraden beweglich ist, wobei ein erster Freiheitsgrad gemäß einer Längsrichtung (P) definiert ist und ein zweiter Freiheitsgrad gemäß einer Querrichtung (G) definiert ist, wobei die Querrichtung (G) im Wesentlichen senkrecht zur Längsrichtung (P) ist.

12. Steuervorrichtung (10) nach einem der vorhergehenden Ansprüche, wobei das Steuermodul (22) so konfiguriert ist, dass es die erste Positionsanpassungskraft (F_{AA}) in Abhängigkeit von den Positionsdaten des zweiten Steuerknüppels (14B) so steuert, dass die Position des zweiten Steuerknüppels (14B) in Bezug auf seine Neutralstellung (p_{N}) und die Position des ersten Steuerknüppels (14A) in Bezug auf seine Neutralstellung (p_{N}) identisch sind,
wobei das Steuermodul (22) außerdem so konfiguriert ist, dass es die zweite Positionsanpassungskraft (F_{AB}) in Abhängigkeit von der ersten Positionsanpassungskraft (F_{AA}) und der ersten Rückstellkraft (F_{RA}) steuert.

13. Steuerverfahren eines Luftfahrzeugs durch eine Steuervorrichtung (10) nach einem der Ansprüche 1 bis 12, wobei das Verfahren die folgenden Schritte umfasst:
- Verschieben des ersten Steuerknüppels (14A) gemäß mindestens einem Freiheitsgrad,
- Erfassen der Position des ersten Steuerknüppels (14A) durch das Erfassungssystem (18),
- Erzeugen von Positionsdaten, die für die Position des ersten Steuerknüppels (14A) repräsentativ sind, durch das Erfassungssystem (18),
- Steuern der zweiten Positionsanpassungskraft (F_{AB}) durch das Steuermodul (22) in Abhängigkeit von den Positionsdaten des ersten Steuerknüppels (14A), so dass die Position des ersten Steuerknüppels (14A) in Bezug auf seine neutrale Position (p_{N}) und die Position des zweiten Steuerknüppels (14B) in Bezug auf seine neutrale Position (p_{N}) identisch sind,
- Steuerung der ersten Positionsanpassungskraft (F_{AA}) durch das Steuermodul (22) in Abhängigkeit von der zweiten Positionsanpassungskraft (F_{AB}) und der zweiten Rückstellkraft (F_{RB}).

14. Steuerverfahren nach Anspruch 13, umfassend die folgenden Schritte:
- Aufbringen einer Steuerkraft auf den zweiten Steuerknüppel (14B) durch ein Besatzungsmitglied,
- Änderung der zweiten Positionsanpassungskraft (F_{AB}) durch das Steuermodul (22) in Abhängigkeit von der Steuerkraft, die von dem Besatzungsmitglied auf den zweiten Steuerknüppel (14B) ausgeübt wird,
- Änderung der ersten Positionsanpassungskraft (F_{AA}) durch das Steuermodul (22) in Abhängigkeit von der zweiten Positionsanpassungskraft (F_{AB}) und der zweiten Rückstellkraft (F_{RB}).

## Claims

1. A piloting device (10) for piloting an aircraft comprising a first control stick (14A) and a second control stick (14B), each movably mounted on a support (12) between a plurality of positions around a neutral position (p_{N}) in at least one degree of freedom,
the piloting device (10) further comprising:
- a detection system (18) for detecting the position of the first control stick (14A) and second control stick (14B), configured to generate first position data representing the position of the first control stick (14A) and second position data representing the position of the second control stick (14B),
- a first elastic mechanism (16A) configured to apply a first restoring force (F_{RA}) to the first control stick (14A), toward its neutral position (p_{N}),
- a second elastic mechanism (16A) configured to apply a second restoring force (F_{RB}) to the second control stick (14B), toward its neutral position (p_{N}),
- a first actuation system (20A) configured to apply a first position adjustment force (F_{AA}) to the first control stick (14A), according to each degree of freedom,
- a second actuation system (20B) configured to apply a second position adjustment force (F_{AB}) to the second control stick (14B), according to each degree of freedom,
- a control module (22) configured to control the second position adjustment force (F_{AB}) based on the position data of the first control stick (14A) so that the position of the first control stick (14A) in relation to its neutral position (p_{N}) and the position of the second control stick (14B) in relation to its neutral position (p_{N}) are identical,
the piloting device (10) being **characterized in that** the control module (22) is further configured to control the first position adjustment force (F_{AA}) based on the second position adjustment force (F_{AB}) and the second restoring force (F_{RB}).

2. The piloting device (10) according to claim 1, without any system for measuring a control force applied to the first or second control stick (14A, 14B) by a crew member.

3. The piloting device (10) according to claim 1 or 2, wherein the second position adjustment force (F_{AB}) depends on a control force applied to the second control stick (14B) by an aircraft crew member.

4. The piloting device (10) according to claim 3, wherein the control module (22) is configured to calculate the control force, the control force being equal to the second position adjustment force (F_{AB}) minus the second restoring force (F_{RB}).

5. The piloting device (10) according to claim 3 or 4, wherein the first position adjustment force (F_{AA}) depends on the control force.

6. The piloting device (10) according to claim 5, wherein the first position adjustment force (F_{AA}) is equal to the control force.

7. The piloting device (10) according to claim 5, wherein the first position adjustment force (F_{AA}) is equal to the control force multiplied by a correction coefficient.

8. The piloting device (10) according to any one of the preceding claims, wherein each elastic mechanism (16A; 16B) comprises one spring system per degree of freedom.

9. The piloting device (10) according to claim 8, wherein, for at least one degree of freedom, the associated spring system of the first elastic mechanism (16A) has a spring constant according to said degree of freedom, the associated spring system of the second elastic mechanism (16B) has a spring constant according to said degree of freedom, the spring constant of the spring system of the first elastic mechanism (16A) being equal to the spring constant of the spring system of the second elastic mechanism (16B) multiplied by the absolute value of an asymmetry coefficient.

10. The piloting device (10) according to claim 8 or 9, wherein the spring system of the elastic mechanism (16A; 16B) comprises a main spring group and an auxiliary spring group, the spring system of the elastic mechanism (16A; 16B) being configured such that:
- the restoring force (F_{RA}, F_{RB}) is applied by the main spring group when the associated control stick is moved between a first position and a second position, and
- the restoring force (F_{RA}, F_{RB}) is applied by the main spring group and the auxiliary spring group when the associated control stick is moved between the second position and a third position.

11. The piloting device (10) according to any one of the preceding claims, wherein each control stick (14A, 14B) is movable in at least two degrees of freedom, a first degree of freedom being defined along a longitudinal direction (P) and a second degree of freedom being defined along a transverse direction (G), the transverse direction (G) being substantially perpendicular to the longitudinal direction (P).

12. The piloting device (10) according to any one of the preceding claims, wherein the control module (22) is configured to control the first position adjustment force (F_{AA}) based on the position data of the second control stick (14B) such that the position of the second control stick (14B) in relation to its neutral position (p_{N}) and the position of the first control stick (14A) in relation to its neutral position (p_{N}) are identical,
the control module (22) being further configured to control the second position adjustment force (F_{AB}) based on the first position adjustment force (F_{AA}) and the first restoring force (F_{RA}).

13. A method for piloting an aircraft with a piloting device (10) according to any of claims 1 to 12, the method comprising the steps of:
- moving of the first control stick (14A) in at least one degree of freedom,
- detection of the position of the first control stick (14A) by the detection system (18),
- generation of position data representing the position of the first control stick (14A) by the detection system (18),
- controlling of the second position adjustment force (F_{AB}) by the control module (22), based on the position data of the first control stick (14A) so that the position of the first control stick (14A) in relation to its neutral position (p_{N}) and the position of the second control stick (14B) in relation to its neutral position (p_{N}) are identical,
- controlling of the first position adjustment force (F_{AA}) by the control module (22), based on the second position adjustment force (F_{AB}) and the second restoring force (F_{RB}).

14. The method according to claim 13, further comprising the following steps:
- applying of a control force to the second control stick (14B) by a crew member,
- modification of the second position adjustment force (F_{AB}) by the control module (22), based on the control force applied to the second control stick (14B) by the crew member,
- modification of the first position adjustment force (F_{AA}) based on the second position adjustment force (F_{AB}) and the second restoring force (F_{RB}).
